# DEMANDE DE BREVET EUROPEEN

(11) **EP 1 441 294 A1**
(43) Date de publication de la demande: **28.07.2004**
(21) Numéro de dépôt: 04075129.9
(22) Date de dépôt: 19.01.2004
(51) Int. Cl.: G06F 17/30

(54) **Procédé en ligne de publication de documents informatiques sur l'internet**

(30) Priorité: 17.01.2003 FR 0300537
(71) Demandeur: Comint, 23300 La Souterraine (FR)
(72) Inventeur: Herraiz, Pierre, 23300 La Souterraine (FR); Ceyrat, Joannes, 86290 St Leomer (FR)
(74) Mandataire: Debay, Yves

(57) **Abrégé**

La présente invention concerne un procédé en ligne de publication en temps réel, sur un site de publication Internet, de documents informatiques, sous forme de site, caractérisé en ce qu'il consiste en l'exécution d'une application logicielle (21) de publication, par un ordinateur (2), dit de publication, sous le contrôle d'un utilisateur, connecté sur le site de publication accessible sur le réseau Internet (R) grâce à un ordinateur (3), dit serveur de pages, et grâce à un navigateur (11) exécuté par un ordinateur (1), dit de conception, de l'utilisateur et affichant des choix proposés par l'application logicielle (21) de publication parmi soit la publication d'une page Internet ou d'un site Internet, soit la publication d'un site Internet contenant des pages Internet dont l'organisation arborescente, dite arborescence (30) de publication, correspondra à une arborescence (20), dite de conception, mais modifiable à tout moment par l'utilisateur connecté sur le site de publication.

## Description

La présente invention concerne un procédé en ligne de publication sur l'Internet d'informations contenues dans des documents informatiques à publier. L'invention concerne plus particulièrement un procédé d'assistance de création en ligne de site Internet par des utilisateurs ne possédant pas d'outils logiciels d'édition de site Internet. Les utilisateurs, grâce au système d'exploitation de leur ordinateur et au navigateur Internet généralement fourni avec, peuvent publier les documents informatiques qu'ils ont créé grâce aux outils multimédia et/ou de bureautique généralement fourni avec leur ordinateur. L'organisation de l'accès à ces documents informatiques, une foi publiés, est alors déterminée par l'organisation du stockage des documents sur le serveur de publication à partir de l'organisation du stockage initial de ces documents dans le système d'exploitation de leur ordinateur, mais modifiable à tout moment par l'utilisateur.

Au sein des informations accessibles par un réseau informatique tel que l'Internet selon le protocole « world wide web » ou « WWW », les informations sont principalement regroupées en pages de consultation, ou « pages web » pour le protocole WWW. Une page correspond à un ensemble d'informations, en particulier de texte, graphique, et informations de mise en forme, qui sont transmises ensemble d'un serveur vers un poste de consultation, à la demande du poste de consultation.

La consultation sur le poste client se fait en utilisant un logiciel appelé « navigateur », ou « browser » en anglais, qui utilise une adresse spécifique à chaque page au sein du réseau pour obtenir une connexion avec un serveur de page contenant les pages à consulter, à travers un ou plusieurs serveurs ou routeurs intermédiaires. Le navigateur demande alors une page au serveur et présente les informations qu'il reçoit pour leur donner l'apparence prévue lors de la création de cette page. Pour cela, le navigateur reçoit des pages sous la forme de fichiers organisés selon un ou plusieurs formats éventuellement imbriqués dans leur organisation.

Le format principal communément utilisé est le format « HTML » (pour l'anglais « Hyper Text Mark-up Language »), et son évolution « XML » (pour l'anglais « eXtended Mark-up Language »). Au sein d'une page mise à disposition sur un serveur, dit serveur web, pour consultation, l'apparence de la page lors de la visualisation est obtenue en incluant dans un fichier texte des paramètres, des balises, ou des éléments graphiques.

Sur une page web peuvent ainsi être affichés des objets logiciels, ou contrôles, permettant de déclencher des actions spécifiques, comme par exemple demander la consultation d'une autre page, interne à ce site ou située dans un autre endroit du réseau Internet. Le fait d'activer un tel contrôle, ou « lien », permet alors de passer simplement d'une page à une ou plusieurs autres. Une page peut alors mener à une ou plusieurs autres, en intégrant dans son fichier HTML, pour chacune de ces pages, un contrôle contenant les références dans le réseau de la nouvelle page à demander. Ces contrôles peuvent faire partie intégrante d'un texte (alors nommés liens hypertexte) ou représenter une zone de l'écran, et sont activés par une interface interactive, par exemple par sélection à la souris ou validation au clavier.

Un ensemble de pages consultables, en particulier un ensemble de pages web, appelé site web, peut être regroupé sous la forme d'une arborescence de pages accessibles à partir d'une unique page, appelée page d'accueil. L'accès à n'importe laquelle des pages d'un tel site publié peut alors se faire en commençant par se connecter sur la page d'accueil dont une adresse est connue, puis en suivant des liens présentés sur cette page d'accueil et menant aux autres pages du site. Une structure en arborescence peut alors se traduire par le fait que certaines pages sont accessibles à partir de la page d'accueil, certaines de ces pages, dites de niveau 1, proposent alors des liens vers d'autres pages dites de niveau 2. On peut alors dire que la page d'accueil représente la tête ou la base de l'arborescence, et que chaque page donnant accès à d'autres pages constitue un sous-ensemble ou une branche de l'arborescence.

Pour obtenir une telle structure en arborescence, le créateur d'un site doit d'abord créer chacune de ces pages et les mémoriser, le plus souvent sous la forme de fichiers dans un format de publication, par exemple HTML ou XML. Ces fichiers sont mémorisés dans des moyens de mémorisation, par exemple dans un ou plusieurs disques durs ou serveurs de fichiers, et doivent être accessibles à un ordinateur ou à un programme réalisant la fonction de serveur de pages web, c'est à dire recevant les demandes des navigateurs et leur transmettant les pages demandées. Chacun de ces liens doit pour cela être paramétré individuellement, en y introduisant des références, souvent appelées chemin d'accès. Ce chemin d'accès permet alors au serveur de pages de trouver l'emplacement où est mémorisé le fichier de publication de la page cible de ce lien.

Le référencement individuel de ces chemins d'accès et le paramétrage de tous les liens correspondant représentent alors un travail à la fois fastidieux, consommateur de temps et source d'erreurs. De même, le déplacement au sein de l'arborescence de l'une des pages du site oblige à modifier le paramétrage de tous les liens qui s'y rapportent, avec le même type d'inconvénients. Ces tâches nécessitent normalement la possession d'outils logiciels d'édition de site Internet et donc une connaissance de ces logiciels et des langages de programmation de site Internet.

Il est connu des procédés d'assistance de création de site Internet, généralement mis à disposition des utilisateurs par leurs fournisseurs d'accès Internet. Ces procédés utilisent des modèles de sites et offrent des choix limités de présentation des pages que l'utilisateur souhaite créer. L'utilisateur paramètre les pages unes par unes et y ajoute des images ou du texte. Ces procédés permettent donc à l'utilisateur de créer son site personnel sans outils logiciel d'édition de site Internet, mais les possibilités qui lui sont offertes sont généralement réduites, du fait de l'utilisation de modèles restreints. De plus l'utilisateur de tels procédés ne peut pas en une seule étape envoyer plusieurs pages qu'il aurait élaboré sur son ordinateur. Seuls les outils logiciels d'édition de site Internet offrent à ce jour une réelle liberté de création, mais cette édition se fait hors connexion puis par connexion au serveur de pages et téléchargement ascendant du site édité.

Par ailleurs, l'ensemble des tâches de création, mémorisation, et liaison des pages d'un site publié, c'est à dire consultable par un tel navigateur, n'est pas toujours réalisé par la même personne, ni sur le même ordinateur. Le créateur d'un site publié utilise souvent les services d'un prestataire de service, par exemple un Fournisseur d'Accès Internet (« Internet Service Provider » en anglais), pour héberger son site. C'est à dire que les fichiers de publication constituant les pages du site seront conservées sur un ordinateur géré par ce prestataire d'hébergement, ou hébergeur. C'est alors ce prestataire qui se chargera de gérer les consultations de ces pages par l'intermédiaire d'un serveur de pages, géré par lui-même ou par un autre prestataire de service.

Dans de nombreux cas, le créateur du site ne connaît donc pas pour chacun des liens qu'il crée le chemin d'accès qui sera valable au moment de la consultation. Le paramétrage de ces liens doit donc être modifié lors de la mémorisation des pages dans le serveur de pages, ou être mis à jour lors de réorganisations internes aux services de l'hébergeur. La création des pages Internet, le paramétrage des liens et leur modification ou mise à jour constituent donc un travail important et une source d'erreurs.

Il est connu des outils logiciels permettant d'automatiser le paramétrage et la mise à jour des liens, à partir des liens élaborés par le(s) concepteur(s) du site Internet grâce aux logiciels d'édition de site Internet. Cependant, ces procédés nécessitent généralement l'existence de liens préalablement déterminés ou une programmation des pages du site dans un des langages de publication ou une structure déterminée par un logiciel d'édition de site Internet. Ces procédés ne sont donc pas utiles au grand public.

Il peut donc être utile de disposer d'un procédé en ligne de publication de documents permettant à un utilisateur de créer son site Internet, directement sur le site hébergeur, sans autres outils logiciels que ceux généralement accessibles au grand public et ne nécessitant aucune connaissance des formats de publication Internet, en offrant une liberté totale de création à l'utilisateur grâce à une automatisation du paramétrage ou de la mise à jour des liens entre les pages du site en cours de création. De même, il peut être avantageux d'automatiser le paramétrage ou la mise à jour de certains éléments se retrouvant à plusieurs reprises dans un ou plusieurs sites d'utilisateurs, tels que des bannières publicitaires ou les éléments d'une charte graphique de présentation.

La présente invention a donc pour objet de pallier des inconvénients de l'art antérieur en proposant un procédé permettant la création, en ligne et en temps réel, de site Internet par publication de documents informatiques et référencement automatisé des liens d'un ensemble de pages consultables sous la forme d'une arborescence, générée en ligne par l'utilisateur lors de la création de son site sur le site de publication ou importée depuis l'ordinateur de conception de l'utilisateur.

Ce but est atteint par un procédé en ligne de publication en temps réel, sur un site de publication Internet, de documents informatiques, quel que soit leur format, sous forme de site Internet consultable à l'aide d'un agent logiciel, dit navigateur, compatible avec l'Internet, caractérisé en ce qu'il consiste en l'exécution d'une application logicielle de publication, par un ordinateur, dit de publication, gérant la publication et la mise à jour de documents sur le site de publication, sous le contrôle d'un utilisateur, connecté sur le site de publication accessible sur le réseau Internet grâce à un ordinateur, dit serveur de pages, et grâce à un navigateur exécuté par un ordinateur, dit de conception, de l'utilisateur et affichant des choix proposés par l'application logicielle de publication parmi soit la publication d'une page Internet ou d'un site Internet par publication de plusieurs pages successivement, dont le contenu correspondra à un ou plusieurs documents à publier, stocké(s) dans des moyens de mémorisation de l'ordinateur de conception, soit la publication d'un site Internet contenant des pages Internet dont l'organisation arborescente, dite arborescence de publication, correspondra à une arborescence, dite de conception, préalablement générée par l'utilisateur grâce au système d'exploitation de l'ordinateur de conception et contenant les documents à publier, mais modifiable à tout moment par l'utilisateur connecté sur le site de publication.

Selon une autre particularité, la publication des pages ou des sites Internet consiste en la mise à disposition du public, sur le réseau Internet, des pages correspondant aux documents publiés par les utilisateurs, par stockage de ces pages dans l'ordinateur serveur de pages, qui peut être l'ordinateur de publication ou un ordinateur différent, la consultation de ces pages étant réalisée par connexion des navigateurs des utilisateurs à l'ordinateur serveur de pages.

Selon une autre particularité, le procédé comporte, en outre, les étapes suivantes, déclenchées par l'utilisateur grâce au navigateur exécuté par l'ordinateur de conception de l'utilisateur :
- connexion de l'utilisateur sur le site de publication de documents, accessible via l'ordinateur serveur de pages, qui propose la consultation des pages publiées sur le site de publication ou la publication de documents, gérée par l'ordinateur de publication exécutant l'application logicielle de publication, permettant de proposer à l'utilisateur soit de s'inscrire comme nouvel utilisateur du site de publication, soit de s'identifier si il est déjà inscrit ;
- inscription éventuelle comme nouvel utilisateur du site de publication ou saisie des identifiants de l'utilisateur déjà inscrit, grâce au navigateur exécuté par l'ordinateur de conception de l'utilisateur puis validation résultant en l'envoi des informations d'identification saisies vers le site de publication ;
- réception et traitement, par l'application logicielle de publication, des informations d'identification saisies par l'utilisateur ;
- envoi par l'application logicielle de publication, vers l'ordinateur de conception, de choix parmi la création ou la mise à jour d'un site ou d'une page Internet par publication de documents ;
- réception, grâce au navigateur exécuté par l'ordinateur de conception de l'utilisateur, des choix proposés par l'application logicielle de publication et sélection, par l'utilisateur, d'une action à réaliser, puis envoi, vers l'ordinateur de publication, de l'action choisie par l'utilisateur ;
- réception et exécution, par l'ordinateur de publication, de l'action choisie par l'utilisateur grâce à son navigateur exécuté par son ordinateur de conception.

Selon une autre particularité, lorsque l'action choisie par l'utilisateur correspond à la création d'un site ou d'une page Internet par publication d'un ou plusieurs documents, l'exécution, par l'ordinateur de publication, de l'action choisie, consiste en l'envoi, vers le navigateur de l'utilisateur, d'une page Internet contenant un champ de saisie et/ou un contrôle logiciel interactif permettant à l'utilisateur, respectivement, en saisissant l'emplacement et/ou en parcourant l'arborescence de conception, de choisir le document à publier ou le répertoire contenant la partie de l'arborescence de conception où les documents à publier se trouvent, la validation du choix résultant en l'envoi, vers l'ordinateur de publication, du document choisi ou de la partie de l'arborescence de conception choisie.

Selon une particularité, le transfert des documents à publier se fait par téléchargement ascendant de l'ordinateur de conception vers l'ordinateur de publication, à travers le réseau informatique Internet ou un réseau compatible avec l'Internet, les documents à publier étant mémorisés dans les moyens de mémorisation de l'ordinateur de publication, selon la même structure que dans les moyens de mémorisation de l'ordinateur de conception.

Selon une particularité, le procédé comporte une étape de génération automatisée et mémorisation, dans des moyens de mémorisation de l'ordinateur de publication, par l'application logicielle de publication, d'un fichier menu comprenant des données représentant la structure de l'arborescence de publication établie à partir de l'arborescence de conception, ces données de structure étant utilisées par un agent logiciel, dit agent de menu, lors de la consultation par le navigateur d'une page affichée pour consultation, pour inclure dans cette page affichée au moins un objet logiciel de navigation, dit lien, permettant à l'utilisateur de demander la consultation d'au moins une autre page, dite page cible, cette page cible dépendant, dans l'arborescence de publication, de la page affichée ou inversement.

Selon une particularité, l'étape de génération et de mémorisation du fichier menu est déclenchée soit par la fin du transfert du document choisi ou de la partie de l'arborescence de conception choisie pour publication, soit par sélection d'une fonction spécifique proposée par l'application logicielle de publication et affichée par le navigateur exécuté par l'ordinateur de conception de l'utilisateur.

Selon une particularité, l'étape de génération et de mémorisation du fichier menu comporte une étape de parcours, par l'application logicielle de publication, de l'ensemble de la partie de l'arborescence de conception envoyée par l'utilisateur, ce parcours comportant au moins une récursivité des étapes suivantes :
- lecture des références d'un élément courant de la structure de l'arborescence de conception ;
- test pour l'identification de la nature de l'élément courant ;
- dans le cas où l'élément courant représente un document à publier sous la forme d'une page, ajout au fichier menu de données représentant les références et le chemin d'accès à ce document ou à une version modifiée de ce document ;
- dans le cas où l'élément courant représente une branche de l'arborescence de conception ou un groupe de documents à publier non encore parcouru, lancement d'une nouvelle étape de parcours similaire appliquée à l'élément courant.

Selon une particularité, dans le cas où l'élément courant représente une branche de l'arborescence de conception, le procédé comporte la création et la mémorisation, dans l'ordinateur de publication, d'un objet logiciel ou d'une page consultable représentant la branche de l'arborescence de publication correspondant à la dite branche de l'arborescence de conception, ou permettant l'affichage ou l'accès à tout ou partie de cette branche de publication ou des pages qu'elle contient.

Selon une particularité, le procédé comporte également une éventuelle étape de conversion, par un agent logiciel de conversion, d'un document depuis un format non publiable, dit natif, vers un document en un format de publication, apte à être interprété par le navigateur, ou d'ouverture de ce document au format natif puis de sauvegarde dans un tel format de publication.

Un autre but de l'invention est de proposer un procédé permettant la mise en forme ou la mise à jour uniformisée et automatisée de certains éléments présents dans des pages d'un tel site.

Ce but est atteint par un procédé tel que décrit ci-dessus et comportant une ou plusieurs étapes automatisées de mise en forme, de modification, ou de mise à jour des documents à publier ou des pages qui en sont issues, en fonction de règles mémorisées dans les moyens de mémorisation de l'ordinateur de publication.

Selon une particularité, la structure de l'arborescence de publication ou l'accès à une page cible de cette arborescence est affichée sous la forme d'un lien hypertexte ou d'un lien graphique interactif, inclus dans au moins une page de consultation ou de navigation dans un format de publication, ce lien étant programmé pour déclencher la transmission ou l'affichage d'au moins une page demandée par le navigateur, selon les étapes suivantes :
- sélection d'une page cible à recevoir ou afficher par le navigateur au sein de l'arborescence de publication, et transmission de ce choix à un agent logiciel exécuté sur un ordinateur serveur de pages et gérant la consultation ;
- appel de l'agent de menu en lui transmettant des paramètres représentant la page cible demandée par le navigateur ;
- ouverture, par l'agent de menu, d'un fichier compatible avec le format de publication, issu du document informatique à publier correspondant à la page cible demandée, par comparaison des références reçues en paramètres avec le fichier menu mémorisé par l'application logicielle de publication ;
- transmission au navigateur ou affichage, par l'agent logiciel gérant la consultation, de la page cible demandée, dans un format compatible avec le format de publication.

Selon une particularité, le format de publication est compatible avec le format HTML ou XML.

Selon une particularité, l'agent (31) logiciel de menu intègre une application embarquée, telle qu'une applet ou une partie d'applet en langage « JAVA » ou « Flash », cette applet étant intégrée, lors de la consultation du site publié, à au moins une page de consultation au sein de ce site pour ajouter des éléments graphiques dynamiques.

Selon une particularité, la conversion des fichiers au format de publication est mise en oeuvre par au moins un composant logiciel compatible avec la technologie « COM » de la société Microsoft.

L'invention, avec ses caractéristiques et avantages, ressortira plus clairement à la lecture de la description faite en référence aux dessins annexés dans lesquels :

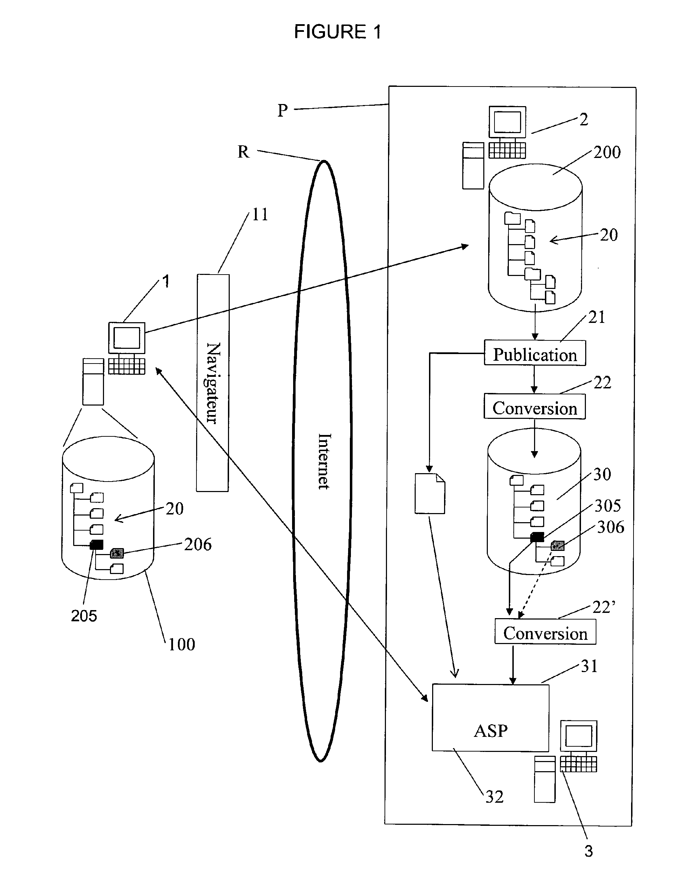

- la figure 1 représente un schéma global de fonctionnement de la création, la mise à jour et la consultation d'un site Internet, en utilisant le procédé en ligne de publication de documents informatiques sur l'Internet selon l'invention ;
- la figure 2 représente un organigramme de fonctionnement de l'application logicielle de publication dans un mode de réalisation de l'invention ;
- la figure 3 représente un organigramme de fonctionnement de l'agent de conversion dans un mode de réalisation de l'invention ;
- la figure 4 représente un schéma présentant une arborescence de publication en regard avec l'arborescence de conception dont elle provient.

Avant d'aborder la description de l'invention, il est nécessaire de préciser les notions suivantes.

Dans une page Internet (ou « page web »), il est possible d'intégrer des objets logiciels capables d'effectuer certaines opérations lors de la consultation, éventuellement en réagissant à des actions de l'utilisateur du poste de consultation ou à des signaux de son navigateur. En langage JAVA (marque déposée) en particulier, un tel élément peut être une « applet » (contraction anglaise signifiant approximativement un « morceau d'application »), et correspond à un agent logiciel ou un composant de programme permettant d'interagir avec d'autres éléments présents sur le serveur ou au sein du poste de consultation. Un tel élément peut bien sûr nécessiter que le poste de consultation dispose de certaines ressources logicielles spécifiques, comme une console virtuelle JAVA dans le cas d'une applet JAVA. Les navigateurs Internet généralement fournis avec les systèmes d'exploitation commercialisés acceptent facilement l'installation de telles consoles, dont le téléchargement et l'installation se fait gratuitement et facilement à partir de nombreux sites Internet. Etant connus de l'art antérieur, aucun détail ne sera donné sur les navigateurs Internet et les consoles virtuelles. Une particularité du procédé selon l'invention est qu'il ne nécessite pas d'outils logiciels autres que les outils multimédia et/ou bureautique et de navigation Internet, auxquels les utilisateurs, même débutants, sont généralement habitués puisqu'ils permettent l'essentiel de leur activité sur les ordinateurs. De même, le procédé selon l'invention utilise l'organisation des documents à publier que l'utilisateur aura généré grâce au système d'exploitation de son ordinateur. Les utilisateurs d'ordinateur sont également habitués à organiser leurs documents selon des arborescences permises par l'explorateur de leur système d'exploitation, quel qu'il soit.

Lorsqu'un utilisateur désire créer son propre site Internet ou sa page Internet personnelle ou professionnelle, le procédé selon l'invention lui permet de le faire sans limiter sa créativité et sans nécessiter de logiciel autre que ceux qu'il posséderait déjà avant cette initiative. L'ordinateur (1), dit de conception, de l'utilisateur possède nécessairement un système d'exploitation, généralement accompagné d'un navigateur (11) Internet. Le système d'exploitation de l'ordinateur (1) de conception permet à l'utilisateur d'organiser ses documents selon une arborescence (20), dite de conception, dans des moyens (100) de mémorisation de l'ordinateur (1) de conception. Le navigateur (11) de l'ordinateur (1) de conception permet à l'utilisateur de consulter des pages Internet en se connectant sur des sites Internet selon différents protocoles qui ne seront pas détaillés ici, puisqu'ils sont connus de l'art antérieur et seront considérés comme naturellement utilisables par le procédé selon l'invention.

L'utilisateur pourra donc se connecter sur un site Internet de publication, rendu accessible sur le réseau (R) Internet grâce à un ordinateur (3) serveur de pages, dont les moyens (300) de mémorisation permettent le stockage des différentes pages du site et dont la connexion au réseau (R) Internet permet la mise à disposition de ces pages au grand public. La publication des documents des utilisateurs dans les pages de ce site de publication est gérée par un ordinateur (2), dit de publication, exécutant une application logicielle (21) de publication permettant la mise en oeuvre du procédé selon l'invention. On notera que selon le choix des gestionnaires du site de publication, l'ordinateur (3) serveur de pages pourrait être également l'ordinateur (2) de publication. Lors de la connexion de l'utilisateur au site de publication, l'ordinateur (3) serveur de pages envoie au navigateur de l'utilisateur, une page Internet d'accueil, dans laquelle, par exemple, des objets logiciels de navigation, dits liens, lui permettent soit de naviguer sur les différentes pages du site de publication, dont les créateurs ont autorisé la consultation, soit de naviguer sur diverses pages Internet prédéterminées par les gestionnaires du site de publication. La page d'accueil pourra également contenir, par exemple, des champs de saisie permettant à l'utilisateur soit de s'inscrire comme nouvel utilisateur du site de publication et donc de créer un compte personnel ou professionnel auprès de l'organisme de gestion du site de publication, soit de s'identifier s'il possède déjà un compte d'utilisateur du site de publication. En fonction de la saisie réalisée par l'utilisateur sur son navigateur (11) Internet, l'application logicielle (21) de publication lui renverra des choix d'action à effectuer. L'utilisateur pourra, par exemple, choisir de consulter un site Internet contenant des documents publiés en saisissant l'adresse du site ou en effectuant une recherche. L'utilisateur pourra également choisir de publier une page Internet, ou un site Internet par publication de plusieurs pages successivement. L'application logicielle (21) de publication pourra envoyer à son navigateur une page Internet lui permettant de définir des éventuels paramètres de présentation de son site ou de sa page Internet, puis d'envoyer vers le site de publication, les documents (202, 203, 204, 206, 207) qu'il souhaite publier sur son site ou sa page. Les documents à publier seront choisis par l'utilisateur en sélectionnant, dans l'arborescence (20) de conception de son ordinateur (1) de conception, un ou plusieurs documents à publier, stocké(s) dans les moyens (100) de mémorisation de l'ordinateur (1) de conception de l'utilisateur. S'il le désire, l'utilisateur pourra également créer son site Internet sans passer par les modèles prédéfinis de paramètres de présentation et sans définir les pages de son site une par une, mais en envoyant, en une seule fois, toute la partie de l'arborescence (20) de conception qui contient les documents qu'il souhaite publier. Il choisira alors la publication d'un site Internet contenant des pages Internet dont l'organisation arborescente, dite arborescence (30) de publication, correspondra à l'arborescence (20) de conception qu'il aura préalablement généré grâce au système d'exploitation de son ordinateur (1) de conception et qui contient les documents à publier, stockés dans les moyens (100) de mémorisation de son ordinateur (1) de conception.

Dans cette description, la position des différents éléments d'une arborescence sera désignée entre autres par leur niveau dans cette arborescence. Le premier élément de l'arborescence sera désigné comme de niveau 0, et les éléments dépendant de cet élément seront désignés comme de niveau 1. Tout élément dépendant d'un élément de niveau « n » sera désigné comme étant de niveau « n (1) ». L'élément de niveau « n » peut également être désigné comme le « parent » direct du ou des éléments de niveau « n (1 ) » qui dépendent de lui, lesquels seront désignés comme éléments « enfants » de cet élément « parent ». Au sein d'une arborescence, certains éléments peuvent avoir des éléments enfants (ou fils ou filles) dépendant de lui, d'autres éléments peuvent ne pas en avoir. Une branche d'arborescence désigne alors un élément de cette arborescence et tous les éléments de niveau supérieur, c'est à dire qui « descendent » de cet élément par cette relation de « parenté ».

Pour obtenir un affichage des liens disponibles dans les différentes pages d'un site publié pour consultation, l'application logicielle (21) de publication, exécutée par l'ordinateur (2) de publication et permettant la mise en oeuvre du procédé selon l'invention, utilise dans une ou plusieurs de ces pages un objet logiciel, dit agent (31) de menu, permettant l'affichage ou la création automatique de liens dans ces pages à partir d'informations mémorisées dans un fichier appelé fichier (310) menu. Ce fichier menu contient en particulier des informations représentant chacune des pages d'une arborescence (30) de publication selon laquelle ces pages doivent être accessibles. Dans ce fichier (310) menu, ces informations représentant ces pages sont associées aux références permettant de déterminer le chemin d'accès des fichiers de publication correspondant à ces pages.

Lors de la consultation d'une page contenant cet agent de menu, celui-ci utilise des informations lues dans ce fichier menu pour afficher dans cette même page un ou plusieurs liens permettant l'affichage d'autres pages, dites pages accessibles.

Dans ce mode de réalisation, les pages accessibles sont typiquement la page parente de la page affichée ainsi que l'ensemble des pages enfants, ou pages filles, dépendant directement de la page affichée. Chaque page affichée fournit donc un accès direct à la fois au niveau précédent ou inférieur, et à tout ou partie des pages du niveau suivant ou supérieur dans la branche d'arborescence partant de la page affichée.

Selon les applications, cet agent (31) de menu peut n'afficher de liens que pour l'accès aux pages des niveaux immédiatement contigus à celui de la page affichée, ou à des pages de niveaux plus éloignés.

Dans un mode de réalisation (non représenté), un tel agent (31) de menu peut en particulier afficher une représentation graphique d'une partie plus large ou de l'ensemble de l'arborescence (30) de consultation. Il est alors possible d'accéder directement à une autre page de l'arborescence (30), même éloignée de la page affichée, en cliquant directement sur la partie correspondante de cette représentation graphique.

Cet agent (31) de menu est au format html et consultable par tout navigateur. Pour un agrément graphique, l'agent de menu pourra intégrer des fonctionnalités utilisant les technologies existantes, par exemple des applets de type « FLASH » ou « JAVA ». Le fichier (310) menu généré par cet agent contient alors des informations réparties en différentes lignes de texte présentant, par exemple, la forme suivante :
« TEXT : NOMLIEN » « n » « p » « LINK : CHEMINPAGE »
   - NOMLIEN correspond au texte à afficher dans la page actuelle pour représenter le contrôle réalisant le lien à afficher ;
   - CHEMINPAGE correspond au chemin d'accès de la page cible, codé selon le système d'exploitation pour une page cible située dans les moyens de mémorisation ou sous la forme d'une adresse universelle de type URL pour une page cible située ailleurs dans le réseau ;
   - la valeur de « n » représente le niveau, dans l'arborescence totale, de la page cible du lien à afficher ;
   - la valeur de « p » indique si la page cible présente elle-même des pages filles (p=0) ou non (p=1 ).

Lors de la conception du site et des différentes pages qui le composent, l'utilisateur créateur du site compose et mémorise un fichier pour chacune de ces pages, à l'aide d'un ordinateur (1) de conception et de moyens (100) de mémorisation correspondant.

Selon ses outils ou selon sa politique, ce créateur pourra mémoriser ces pages directement au format disponible dans le logiciel qu'il utilise. Ainsi une page comportant principalement du texte pourra être composée à l'aide d'un logiciel de traitement de texte et mémorisée tout d'abord sous la forme d'un simple document au format de ce traitement de texte ou d'un autre. Ce format pourra être par exemple un format compatible avec le logiciel « WORD » (marque déposée) de la société Microsoft et dont le nom de fichier se terminera par une extension comportant les caractères «.doc ». De la même façon, une page comportant principalement des tableaux de chiffres pourra être composée à l'aide d'un logiciel de type tableur et mémorisée sous la forme d'un simple fichier au format de ce tableur ou d'un autre. Ce format pourra alors être par exemple un format compatible avec le logiciel « EXCEL » (marque déposée) de la société Microsoft, et dont le nom de fichier se terminera par «.xls ». Selon les applications, ce créateur pourra également mémoriser ses pages directement dans un fichier au format de publication, par exemple au format HTML et dont le nom de fichier se termine par «.htm », mais le procédé selon l'invention ne l'oblige pas à réaliser ses documents sous ce type de format.

Lorsque l'utilisateur (ou « créateur ») décide de créer son site, il conçoit la structure de son site en modifiant, si nécessaire, l'organisation des documents (202, 203, 304, 206, 207) qu'il souhaite publier. Il organise ces documents selon une arborescence (20) de conception qui définit l'arborescence (30) de publication selon laquelle il souhaite que les pages (302, 303, 304, 306, 307), correspondant aux documents à publier, soient consultables. Au sein des moyens de mémorisation (100) qu'il utilise, il va donc mémoriser les différents documents correspondant à ces différentes pages, selon correspondant à l'arborescence (30) de publication qu'il souhaite obtenir. Cette arborescence (20) de conception est réalisée en utilisant les fonctionnalités du système d'exploitation qui gèrent ses moyens de mémorisation (100) habituels, ce qui ne nécessite donc pas de fonctionnalités ni de formation importantes. Dans un système d'exploitation typique, tel que « WINDOWS », « DOS », « MacOS », ou « UNIX » (marques déposées), une telle arborescence est réalisée en créant un dossier (201, 205), ou répertoire (« folder » ou « directory » en anglais) pour chacun des éléments de l'arborescence dont dépendent d'autres éléments « enfants » (206, 207).

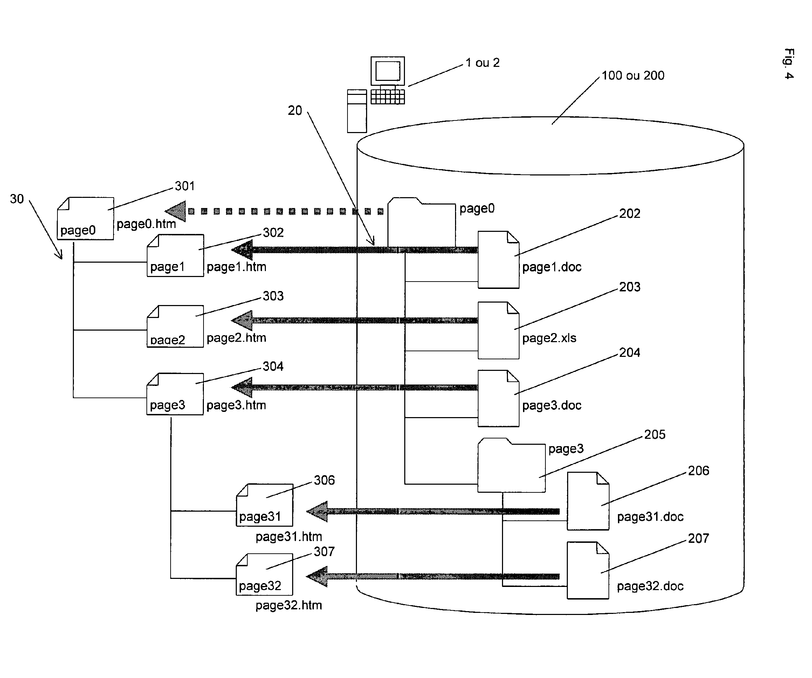

Ainsi qu'illustré en figure 4, un premier dossier (201) de base contiendra l'ensemble des documents (202, 203, 204) correspondant aux pages de niveau 1. Au sein du dossier contenant les documents correspondant à des pages d'un niveau « n », il existera un sous-dossier portant le nom de chaque page ayant des pages filles. Chacun de ces sous-dossiers contiendra alors l'ensemble de la branche d'arborescence dépendant de la page portant le nom de ce sous-dossier. Une page (304) de niveau 1 intitulée « page3 » pourra être composée avec le logiciel « WORD » et sera alors mémorisée dans un fichier document (204) dont le nom est « page3.doc », ce fichier étant lui-même situé dans le dossier (201) intitulé « page0 » contenant l'ensemble de l'arborescence de conception. Si cette page (304) « page3 » présente deux pages (306, 307) filles intitulées « page31 » et « page32 », l'arborescence de conception comportera alors dans le même dossier que le fichier « page3.doc » un sous-dossier (205) intitulé « page3 ». Ce dossier « page3 » contiendra alors les fichiers (206, 207) correspondant à la branche de l'arborescence dépendant de la page « page3 ». Dans l'exemple, le dossier « page3 » comprendra les fichiers intitulés « page31.doc » et « page32.doc » correspondant respectivement aux pages « page31 » et « page32 », qui dépendent de la page « page3 » et seront accessibles depuis celle-ci.

Une fois qu'il a réalisé ou modifié le contenu d'un tel site de consultation, le créateur va alors transférer les fichiers correspondant aux pages de ce site, depuis l'ordinateur (1) de conception vers un ordinateur (2) de publication, ou vers des moyens (200) de mémorisation accessibles à un tel ordinateur de publication. Dans le procédé selon l'invention, ce transfert s'effectue de façon à ce que les fichiers soient mémorisés dans l'ordinateur de publication selon la même arborescence (20) de conception qu'ils l'étaient dans l'ordinateur (1 ) de conception.

Une fois que les fichiers nécessaires à la publication ou à la mise à jour du site sont accessibles à l'ordinateur de publication, le procédé selon l'invention comporte une phase d'analyse de l'arborescence (20) de conception et de génération d'un fichier (310) menu représentant l'arborescence (30) de publication qui doit être utilisée pour la consultation des pages du site à publier. Dans le mode de réalisation ici décrit, cette analyse et cette génération sont réalisées par l'application logicielle (21) de publication exécutée par l'ordinateur (2) de publication qui gère la publication, la mise à jour et la consultation des documents des différents utilisateurs identifiés du site de publication. Selon le cas, lorsqu'une présentation graphique particulière du menu est souhaitée par l'utilisateur, le menu pourra intégrer, grâce à l'agent (31) de menu, par exemple écrit dans le langage « Active Server Page » (ASP), des applets de type « JAVA » ou « Flash », par exemple. Un fichier intitulé, par exemple, « menu.asp » sera alors actualisé à chaque demande de consultation d'une page du site par un utilisateur. Lorsqu'un utilisateur consultera alors une des pages du site, l'agent (31) de menu génèrera, au format adapté au navigateur de l'utilisateur, un menu actualisé, faisant apparaître l'arborescence du site et la position de la page en cours dans cette arborescence.

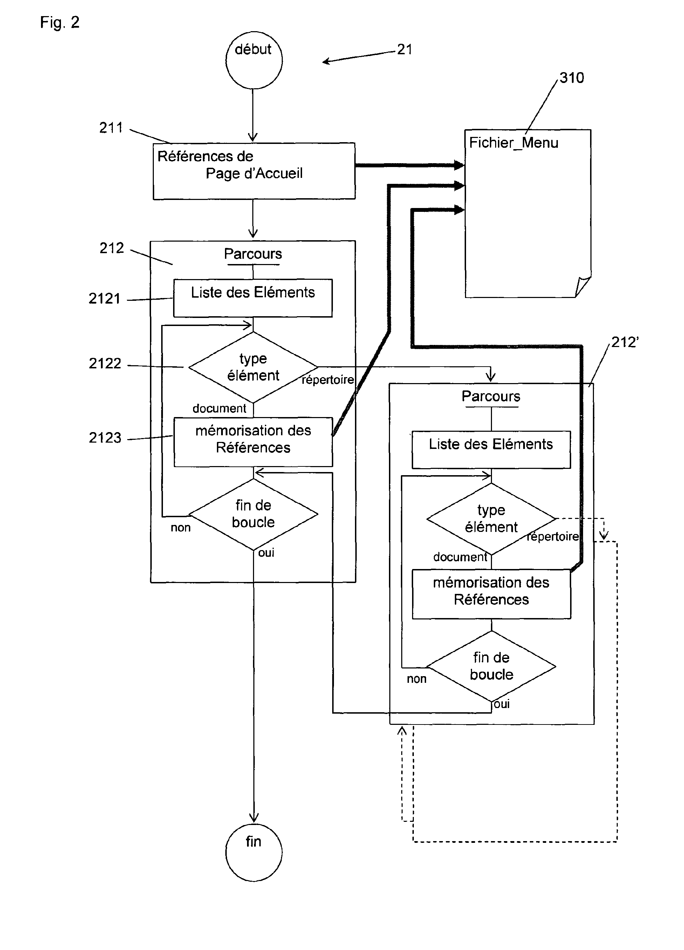

Ainsi qu'illustré en figure 2, l'application logicielle de publication réalise un traitement de parcours de l'ensemble de l'arborescence (20) de conception, et génère un fichier (310) menu contenant des lignes de données représentant les références des objets rencontrés dans cette arborescence. Ces lignes de données sont écrites selon un format prévu pour être lu par l'agent (31) de menu, tel que décrit précédemment. L'agent (31) de menu génère, en fonction des pages consultées par l'utilisateur, un fichier menu actualisé, par exemple au format HTML, qui pourra être affiché par le navigateur de l'utilisateur.

Dans une étape (211) d'ouverture du processus, l'application logicielle (21) de publication crée le fichier menu (310) et y mémorise une ligne de données représentant les références et le chemin d'accès de la page d'accueil et du dossier où est mémorisée l'arborescence de conception et les fichiers qu'elle contient. Ce chemin d'accès peut par exemple être constant pour un créateur donné, ou paramétré automatiquement par l'ordinateur de publication en fonction de l'emplacement qui a été utilisé pour mémoriser les fichiers de l'arborescence de conception lors de leur réception.

L'application logicielle (21) de publication réalise alors une étape (212) d'exploration et de référencement du contenu du dossier (201) de base de l'arborescence (20) de conception. Après avoir établi une liste (2121) des éléments mémorisés dans ce dossier, l'application logicielle de publication effectue un test (2122) la nature de chacun de ces éléments en une boucle récursive.

Pour chaque fichier présent dans le dossier analysé, l'application logicielle de publication lit le chemin d'accès dans les moyens de mémorisation de l'ordinateur de publication et écrit (2123) dans le fichier (310) menu une ligne de données représentant ce chemin d'accès avec le nom du fichier, le fait qu'il s'agit d'un fichier, et le niveau de ce fichier dans l'arborescence (niveau 1 pour les fichiers trouvés dans le dossier de base). A partir de fichier (310) menu, l'agent (31) de menu générera un fichier (310) menu au format adapté au navigateur de l'utilisateur consultant la page Internet correspondant à ce fichier. Ce format pourra, comme décrit précédemment, être en HTML et intégrer des applets.

Pour chaque dossier trouvé dans le dossier analysé, dans l'exemple le dossier « page3 » (205), l'application logicielle de publication mémorise l'ouverture de cette branche de l'arborescence et lance une nouvelle étape (212') de parcours du dossier trouvé. Cette nouvelle étape (212') reprend le même algorithme que l'étape (212) du dossier de base, mais appliqué au dossier (205) trouvé, en incrémentant de 1 le niveau qui sera mémorisé dans les références des fichiers (206, 207) qui seront trouvés au sein de cette branche de l'arborescence.

Pour chaque élément de type dossier trouvé dans un dossier de niveau « n », l'application logicielle de publication ouvre de la même façon une nouvelle étape de parcours du même type, imbriquée dans l'exécution de l'étape précédente et utilisant un niveau de valeur « n (1) ».

Lorsqu'une quelconque étape de parcours (212') a terminé de tester tous les éléments du dossier qu'elle traite, l'application logicielle de publication termine cette étape (212') et remonte à l'étape (212) de parcours qui l'avait lancée. Ainsi chaque branche sera parcourue et dans son intégralité avant tout passage à l'élément suivant dans chaque niveau, et tous les fichiers et toutes les sous-branches seront référencés et mémorisés dans le fichier (310) menu.

Lorsque la première étape (212) de parcours se termine, l'application logicielle de publication a donc mémorisé dans le fichier (310) menu les références et la structure de l'ensemble de l'arborescence (20) de conception et de ses fichiers.

Ainsi que mentionné précédemment, les fichiers de l'arborescence (20) de conception peuvent être déjà mémorisés sous la forme d'un document au format de publication, par exemple un fichier en «.htm », ou sous la forme d'un document en format dit natif, non directement publiable ou non lisible par les navigateurs de consultation, par exemple un fichier (202, 204, 206, 207) texte en «.doc » ou tableur (203) en «.xls ».

Dans le cas où l'arborescence de conception comprend de tels fichiers nécessitant une conversion ou un traitement supplémentaire, le procédé selon l'invention comporte un processus de conversion réalisée par un agent (22, 22') de conversion.

Cette étape de conversion peut prendre place lors de la publication ou de la mise à jour du site, et être réalisée par un agent (22) de conversion dit préalable. Les pages sont alors stockées sous forme de fichiers publiables, dans des moyens (300) de mémorisation accessible à l'ordinateur (3) serveur de pages. Cette conversion préalable peut être déclenchée automatiquement lors de la publication ou être activée par le créateur du site depuis l'ordinateur (1) de conception.

Cette étape de conversion peut également s'effectuer individuellement pour chaque page consultée. Les pages sont alors stockées sous forme de fichiers au format natif de leurs documents sources dans les moyens (300) de mémorisation utilisés par l'ordinateur (3) serveur de pages. Lorsque le navigateur (11) demande la consultation d'une page (306), l'agent (32) serveur lit le fichier correspondant à cette page et le fait traduire par un agent (22') de conversion en appelant la méthode correspondant au type de document natif au sein de l'agent (22') de conversion.

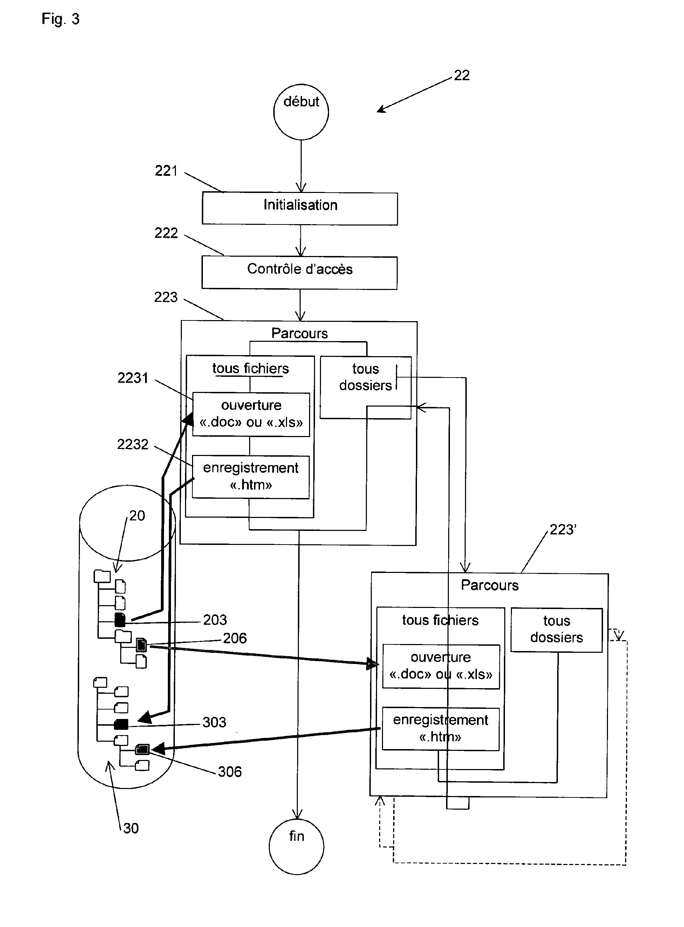

Au cours de ce processus de conversion, ainsi qu'illustré en figure 3, l'agent (22) de conversion effectue une initialisation (221) des objets logiciels nécessaires à la conversion des fichiers documents au format natif. Au cours du processus, l'agent de conversion effectue également un contrôle (222) des droits d'accès aux fichiers à convertir, par exemple en vérifiant que cette étape de conversion est bien demandée par un agent logiciel s'exécutant en local, c'est à dire dans le même environnement d'exploitation, et ne provient pas d'un utilisateur externe qui risquerait de ne pas être autorisé.

De la même façon que décrit pour l'application logicielle (21) de publication, l'agent de conversion effectue une étape (223) de parcours du dossier (201) de base de l'arborescence (20) de consultation, et des étapes (223') de parcours imbriquées pour chacune des branches et sous-branches de l'arborescence à convertir. Au sein de ces étapes de parcours, pour chaque fichier trouvé et testé comme étant d'un type natif apte à être converti, l'agent de conversion va lire dans les moyens de mémorisation le fichier (203, 206) document au format natif, puis le convertir en un fichier au format de publication. Si l'étape (22) de conversion est effectuée de façon préalable, le résultat de la conversion est alors mémorisé sous la forme d'un fichier (303, respectivement 306) dans les moyens (300) de mémorisation du serveur (3) de page. Si l'étape (22') de conversion est réalisée lors de la demande de consultation d'une page, le résultat de la conversion est alors envoyé par l'agent (32) serveur au navigateur (11 ) à travers le réseau (R).

Dans le mode de réalisation décrit ici, la conversion se fait par ouverture du document natif puis sauvegarde sous le format de publication. L'agent de conversion utilise alors un ensemble de composants logiciels de type ActiveX programmés en Visual Basic (marques déposées), et dont les méthodes sont appelées par des lignes de code exécutées au sein d'une page web, de type Active Server Page. Ces éléments sont en particulier organisés de façon à être compatibles avec la technologie COM (« Component Object Modelling ») de la société Microsoft. Dans le cas de documents natifs au format WORD ou EXCEL ou compatible, c'est à dire dont les extensions des noms de fichiers sont respectivement en «.doc » et «.xls », la conversion consiste à faire ouvrir le document en tant que document « WORD » ou « EXCEL », puis à faire exécuter par ce logiciel une commande d'enregistrement en spécifiant une option déterminant l'utilisation du format HTML. Ces éléments peuvent par exemple être mis en oeuvre au sein d'un serveur web pouvant éventuellement réaliser les fonctions conjointes de serveur de pages et d'ordinateur de publication.

On notera que cette étape de conversion pourra également, dans certains cas, ne pas être effectuée, auquel cas le document publié est envoyé sous son format natif vers les navigateurs de consultation, qui possèdent généralement des fonctionnalités (appelées « plug-in ») leur permettant de lancer les applications logicielles nécessaires à la lecture du document, reconnu grâce à son extension (ce qui est souvent le cas pour les documents au format « .pdf » mais peut être appliqué aux formats « .doc », « .xls », par exemple).

Selon les applications, les fichiers représentant les pages de consultation peuvent être mémorisés selon une arborescence d'une structure similaire à celle de l'arborescence de conception, ou être tous réunis ou compressés dans un même dossier, pour des raisons d'encombrement ou de facilité de gestion pour l'ordinateur serveur de pages.

Une telle compression peut se faire par exemple en parallèle avec la mémorisation (2123) des références par l'application logicielle (21) de publication. L'application logicielle de publication peut alors effectuer un déplacement ou une copie de chaque fichier dans l'emplacement voulu et mémoriser le chemin d'accès de cet emplacement au sein des références du fichier document au sein du fichier (310) menu généré.

Une telle compression peut également se faire en parallèle avec la conversion (2232) des documents natifs par l'agent (22) de conversion. L'agent de conversion va alors sauvegarder à l'emplacement voulu la version convertie du document natif, et effectuer une modification dans le fichier (310) menu de façon à refléter ces changements de nom de fichier et de chemin d'accès. Dans le cas où le document fourni par le concepteur était déjà au format de publication, l'agent de conversion peut alors copier simplement ce fichier à l'emplacement voulu, et modifier le fichier (310) menu de la même façon.

La compression peut également comprendre un traitement automatisé des pages envoyées par l'agent (32) serveur au navigateur (11), de façon à retirer de ces pages des données inutiles, ou non souhaitables, qui pourraient découler du processus de conversion.

Du fait que l'arborescence (20) de conception a été établie par le créateur (1) du site en fonction de l'arborescence (30) de publication désirée, le procédé selon l'invention permet l'automatisation de la publication du site au sein de l'ordinateur (2) de publication et/ou de l'ordinateur (3) serveur de page.

Cette publication automatisée comprend en particulier le transfert de fichiers nouveaux ou mis à jour de la part du créateur du site, et le déclenchement par celui-ci de l'étape de génération du fichier (310) menu qui est utilisé par la suite pour gérer la consultation des différentes pages de ce site. Cette génération peut par exemple être déclenchée directement par le créateur, après transfert des fichiers de l'arborescence de conception et de ses fichiers dans l'ordinateur (2) de publication. Cette génération peut également être déclenchée automatiquement par la fin de ce transfert.

Un tel déclenchement par la personne ou l'ordinateur (1) réalisant le transfert, permet alors à celle-ci d'obtenir sans délais la mise en ligne du site ou de ses modifications, sans attendre une intervention humaine ou un processus périodique de la part du prestataire (P) de publication ou d'hébergement. La publication étant réalisée grâce au navigateur (11) du créateur, celui-ci peut donc immédiatement et facilement apprécier sa création.

Une telle automatisation permet ainsi à ce prestataire (P) de fournir un service rapide et personnalisé tout en minimisant ses besoins en ressources personnelles ou logicielles. Un tel processus permet également de reporter sur le concepteur une part de la responsabilité du fonctionnement du site et de ses mises à jour, ce qui constitue un gain de transparence et diminue les risques de litiges entre concepteur et prestataire.

Une telle automatisation permet également au concepteur d'effectuer lui-même ses publications et modifications ou mises à jour, ce qui peut lui permettre d'en constater les résultats sans délais, et d'effectuer éventuellement les corrections nécessaires sans perte de temps. La prise en charge de certaines étapes peut également lui permettre de réaliser un gain de temps et d'argent, et lui permettre une meilleure maîtrise de l'ensemble du processus de gestion de son site.

Dans un mode de réalisation (non représenté), une application logicielle peut bien sûr regrouper les tâches de plusieurs des agents décrits ou mentionnés ici, et ces tâches peuvent être réparties différemment tant que leur ordre de causalité ne contredit pas le fonctionnement du procédé ici décrit.

La conversion peut par exemple être effectuée par l'application logicielle de publication, au sein des étapes de parcours (212, 212'), en parallèle avec la mémorisation (2123) des références des fichiers dans le fichier (310) menu. Une étape de conversion peut également être effectuée par l'agent (22) de conversion avant l'étape de publication plutôt qu'après. Une autre conversion ou un traitement supplémentaire peut également être effectué au moment de la consultation, par exemple par l'agent (22') de conversion au sein de l'ordinateur (3) serveur de pages, pour adapter les pages aux caractéristiques du navigateur (11) exécuté par l'ordinateur de l'utilisateur souhaitant consulter ces pages.

Dans un mode de réalisation (non représenté), l'application logicielle (21) de publication vérifie que chaque dossier constituant la base d'une branche de l'arborescence de conception correspond bien à un fichier décrivant une page du même nom. Si un tel fichier est absent, alors l'application logicielle de publication génère un fichier représentant une page de consultation comprenant les liens nécessaires à l'accès aux pages qui dépendent de ce dossier. Cette page peut être générée en tant que page blanche, ou utiliser un modèle ou une page type préalablement paramétrée pour cela.

Selon les applications, la page (301) d'accueil correspondant au dossier (201) de base de l'arborescence peut être transmise séparément, ou être fournie par le prestataire, ou être générée comme décrit ci-dessus.

La présente description expose le procédé selon l'invention dans des modes de réalisation comportant une répartition déterminée des tâches et opérations entre les différents agents et applications concernés. La flexibilité de l'organisation d'une application informatique permet bien sûr de présenter différemment cette répartition, en particulier lorsque les distinctions entre les différents agents et leurs dénominations sont des notions abstraites n'influant pas sur leurs caractéristiques principales de fonctionnement. Il est donc évident que le procédé selon l'invention peut également être mis en oeuvre dans d'autres modes de réalisation non décrits ici, sans sortir de l'esprit de l'invention, en particulier en combinant différemment les diverses variantes exposées pour chaque tâche ou agent. De même, la répartition abstraite des tâches entre des agents ou applications mémorisés en un même lieu et temps, peut être combinée en diverses variantes non décrites ici sans sortir de l'esprit de l'invention.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Procédé en ligne de publication en temps réel, sur un site de publication Internet, de documents informatiques (202, 203, 204, 206, 207), quel que soit leur format, sous forme de site Internet consultable à l'aide d'un agent logiciel, dit navigateur (11), compatible avec l'Internet, **caractérisé en ce qu'**il consiste en l'exécution d'une application logicielle (21) de publication, par un ordinateur (2), dit de publication, gérant la publication et la mise à jour de documents sur le site de publication, sous le contrôle d'un utilisateur, connecté sur le site de publication accessible sur le réseau Internet (R) grâce à un ordinateur (3), dit serveur de pages, et grâce à un navigateur (11) exécuté par un ordinateur (1), dit de conception, de l'utilisateur et affichant des choix proposés par l'application logicielle (21) de publication parmi soit la publication d'une page nternet ou d'un site Internet par publication de plusieurs pages successivement, dont le contenu correspondra à un ou plusieurs documents à publier, stocké(s) dans des moyens (100) de mémorisation de l'ordinateur (1) de conception, soit la publication d'un site Internet contenant des pages Internet dont l'organisation arborescente, dite arborescence (30) de publication, correspondra à une arborescence (20), dite de conception, préalablement générée par l'utilisateur grâce au système d'exploitation de l'ordinateur (1) de conception et contenant les documents (202, 203, 204, 206, 207) à publier, mais modifiable à tout moment par l'utilisateur connecté sur le site de publication.

2. Procédé selon la revendication 1, **caractérisé en ce que** la publication des pages ou des sites Internet consiste en la mise à disposition du public, sur le réseau Internet (R), des pages (302, 303, 304, 306, 307) correspondant aux documents (202, 203, 204, 206, 207) publiés par les utilisateurs, par stockage de ces pages dans l'ordinateur (3) serveur de pages, qui peut être l'ordinateur (1) de publication ou un ordinateur différent, la consultation de ces pages étant réalisée par connexion des navigateurs (11) des utilisateurs à l'ordinateur (3) serveur de pages.

3. Procédé selon une des revendications 1 et 2, **caractérisé en ce qu'**il comporte en outre les étapes suivantes, déclenchées par l'utilisateur grâce au navigateur (11) exécuté par l'ordinateur (1) de conception de l'utilisateur :
- connexion de l'utilisateur sur le site de publication de documents, accessible via l'ordinateur (3) serveur de pages, qui propose la consultation des pages publiées sur le site de publication ou la publication de documents, gérée par l'ordinateur (2) de publication exécutant l'application logicielle (21) de publication, permettant de proposer à l'utilisateur soit de s'inscrire comme nouvel utilisateur du site de publication, soit de s'identifier si il est déjà inscrit ;
- inscription éventuelle comme nouvel utilisateur du site de publication ou saisie des identifiants de l'utilisateur déjà inscrit, grâce au navigateur (11) exécuté par l'ordinateur (1) de conception de l'utilisateur puis validation résultant en l'envoi des informations d'identification saisies vers le site de publication ;
- réception et traitement, par l'application logicielle (21) de publication, des informations d'identification saisies par l'utilisateur ;
- envoi par l'application logicielle (21) de publication, vers l'ordinateur (1) de conception, de choix parmi la création ou la mise à jour d'un site ou d'une page Internet par publication de documents ;
- réception, grâce au navigateur (11 ) exécuté par l'ordinateur (1 ) de conception de l'utilisateur, des choix proposés par l'application logicielle (21) de publication et sélection, par l'utilisateur, d'une action à réaliser, puis envoi, vers l'ordinateur (2) de publication, de l'action choisie par l'utilisateur ;
- réception et exécution, par l'ordinateur (1) de publication, de l'action choisie par l'utilisateur grâce à son navigateur (11) exécuté par son ordinateur (1) de conception.

4. Procédé selon une des revendications 1 à 3, **caractérisé en ce que**, lorsque l'action choisie par l'utilisateur correspond à la création d'un site ou d'une page Internet par publication d'un ou plusieurs documents, l'exécution, par l'ordinateur (1) de publication, de l'action choisie, consiste en l'envoi, vers le navigateur (11) de l'utilisateur, d'une page Internet contenant un champ de saisie et/ou un contrôle logiciel interactif permettant à l'utilisateur, respectivement, en saisissant l'emplacement et/ou en parcourant l'arborescence (20) de conception, de choisir le document à publier ou le répertoire contenant la partie de l'arborescence de conception où les documents à publier se trouvent, la validation du choix résultant en l'envoi, vers l'ordinateur (2) de publication, du document choisi ou de la partie de l'arborescence (20) de conception choisie.

5. Procédé selon une des revendications 1 à 4, **caractérisé en ce que** le transfert des documents à publier se fait par téléchargement ascendant, de l'ordinateur (1) de conception vers l'ordinateur (2) de publication, à travers le réseau informatique Internet (R) ou un réseau compatible avec l'Internet, les documents à publier étant mémorisés dans les moyens (200) de mémorisation de l'ordinateur (2) de publication, selon la même structure que dans les moyens (100) de mémorisation de l'ordinateur (1) de conception.

6. Procédé selon une des revendications 1 à 5, **caractérisé en ce qu'**il comporte une étape de génération automatisée et mémorisation, dans des moyens (200) de mémorisation de l'ordinateur (2) de publication, par l'application logicielle (21) de publication, d'un fichier menu (310) comprenant des données représentant la structure de l'arborescence (30) de publication établie à partir de l'arborescence (20) de conception, ces données de structure étant utilisées par un agent logiciel, dit agent (31) de menu, lors de la consultation par le navigateur (11) d'une page affichée pour consultation, pour inclure dans cette page affichée au moins un objet logiciel de navigation, dit lien, permettant à l'utilisateur de demander la consultation d'au moins une autre page, dite page cible, cette page cible dépendant, dans l'arborescence (30) de publication, de la page affichée ou inversement.

7. Procédé selon la revendication 6, **caractérisé en ce que** l'étape de génération et de mémorisation du fichier menu (310) est déclenchée soit par la fin du transfert du document choisi ou de la partie de l'arborescence (20) de conception choisie pour publication, soit par sélection d'une fonction spécifique proposée par l'application logicielle (21) de publication et affichée par le navigateur (11 ) exécuté par l'ordinateur (1 ) de conception de l'utilisateur.

8. Procédé selon la revendication 6, **caractérisé en ce que** l'étape de génération et de mémorisation du fichier menu comporte une étape (212) de parcours, par l'application logicielle (21) de publication, de l'ensemble de la partie de l'arborescence (20) de conception envoyée par l'utilisateur, ce parcours comportant au moins une récursivité des étapes suivantes :
- lecture des références d'un élément courant de la structure de l'arborescence de conception ;
- test pour l'identification de la nature de l'élément courant ;
- dans le cas où l'élément courant représente un document à publier sous la forme d'une page, ajout au fichier menu (310) de données représentant les références et le chemin d'accès à ce document ou à une version modifiée de ce document ;
- dans le cas où l'élément courant représente une branche de l'arborescence (20) de conception ou un groupe de documents à publier non encore parcouru, lancement d'une nouvelle étape de parcours similaire appliquée à l'élément courant.

9. Procédé selon la revendication 8, **caractérisé en ce que**, dans le cas où l'élément (201) courant représente une branche de l'arborescence (20) de conception, le procédé comporte la création et la mémorisation, dans l'ordinateur de publication, d'un objet logiciel ou d'une page (301) consultable représentant la branche de l'arborescence (30) de publication correspondant à la dite branche de l'arborescence (20) de conception, ou permettant l'affichage ou l'accès à tout ou partie de cette branche de publication ou des pages qu'elle contient.

10. Procédé selon une des revendications 1 à 9, **caractérisé en ce qu'**il comporte également une éventuelle étape de conversion d'un document (202, 203, 204, 206, 207) depuis un format non publiable, dit natif, vers un document (302, 303, 304, 306, 307) en un format de publication, apte à être interprété par le navigateur (11), ou d'ouverture de ce document au format natif puis de sauvegarde dans un tel format de publication.

11. Procédé selon une des revendications 1 à 10, **caractérisé en ce qu'**il comporte une ou plusieurs étapes automatisées de mise en forme, de modification, ou de mise à jour des documents à publier ou des pages qui en sont issues, en fonction de règles mémorisées dans les moyens de mémorisation de l'ordinateur (2) de publication.

12. Procédé selon une des revendications 1 à 11, **caractérisé en ce que** la structure de l'arborescence (30) de publication ou l'accès à une page cible de cette arborescence est affichée sous la forme d'un lien hypertexte ou d'un lien graphique interactif, inclus dans au moins une page (305) de consultation ou de navigation dans un format de publication, ce lien étant programmé pour déclencher la transmission ou l'affichage d'au moins une page demandée par un navigateur (11), selon les étapes suivantes :
- sélection d'une page (306) cible à recevoir ou afficher par le navigateur (11) au sein de l'arborescence de publication, et transmission de ce choix à un agent (32) logiciel exécuté sur un ordinateur (3) serveur de pages et gérant la consultation ;
- appel de l'agent (31) de menu en lui transmettant des paramètres représentant la page (306) cible demandée par le navigateur (11) ;
- ouverture, par l'agent (31) de menu, d'un fichier (306) compatible avec le format de publication, issu du document (206) informatique à publier correspondant à la page (306) cible demandée, par comparaison des références reçues en paramètres avec le fichier menu (310) mémorisé par l'application logicielle (21) de publication ;
- transmission au navigateur (11) ou affichage, par l'agent (32) logiciel gérant la consultation, de la page (306) cible demandée, dans un format compatible avec le format de publication.

13. Procédé selon une des revendications 1 à 12, **caractérisé en ce que** le format de publication est compatible avec le format HTML ou XML.

14. Procédé selon une des revendications 1 à 13, **caractérisé en ce que** l'agent (31) logiciel de menu intègre une application embarquée, telle qu'une applet ou une partie d'applet en langage « JAVA » ou « Flash », cette applet étant intégrée, lors de la consultation du site publié, à au moins une page de consultation au sein de ce site pour ajouter des éléments graphiques dynamiques.

15. Procédé selon une des revendications 1 à 14, **caractérisé en ce que** la conversion des fichiers au format de publication est mise en oeuvre par au moins un composant logiciel compatible avec la technologie « COM » de la société Microsoft.
